(19)

Europäisches
Patentamt

European
Patent Office

Office européen
des brevets

(11)  **EP 2 871 888 B1**

(12)  **EUROPEAN PATENT SPECIFICATION**

(45) Date of publication and mention
of the grant of the patent:
**06.03.2019  Bulletin 2019/10**

(21) Application number: **13813434.1**

(22) Date of filing: **04.07.2013**

(51) Int Cl.:
**H04W 48/16** *(2009.01)*   **H04B 7/26** *(2006.01)*

(86) International application number:
**PCT/KR2013/005938**

(87) International publication number:
**WO 2014/007556 (09.01.2014 Gazette 2014/02)**

(54) **METHOD FOR TRANSMITTING TERMINAL DETECTION SIGNAL FOR DIRECT COMMUNICATION BETWEEN TERMINALS IN WIRELESS COMMUNICATION SYSTEM, AND DEVICE THEREFOR**

VERFAHREN ZUR ÜBERTRAGUNG VON ENDGERÄTERFASSENDEN SIGNALEN FÜR DIREKTE KOMMUNIKATION ZWISCHEN ENDGERÄTEN IN EINEM DRAHTLOSEN KOMMUNIKATIONSSYSTEM UND VORRICHTUNG DAFÜR

PROCÉDÉ POUR TRANSMETTRE UN SIGNAL DE DÉTECTION DE TERMINAL AFIN D'ÉTABLIR UNE COMMUNICATION DIRECTE ENTRE DES TERMINAUX DANS UN SYSTÈME DE COMMUNICATION SANS FIL, ET SON DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2012  US 201261668434 P**
**26.02.2013  US 201361769721 P**
**28.02.2013  US 201361770331 P**

(43) Date of publication of application:
**13.05.2015  Bulletin 2015/20**

(73) Proprietor: **LG Electronics Inc.**
**Yeongdeungpo-gu**
**Seoul 150-721 (KR)**

(72) Inventors:
• **SEO, Hanbyul**
**Anyang-si**
**Gyeonggi-do 431-080 (KR)**

• **KIM, Hakseong**
**Anyang-si**
**Gyeonggi-do 431-080 (KR)**
• **KIM, Byounghoon**
**Anyang-si**
**Gyeonggi-do 431-080 (KR)**
• **SEO, Daewon**
**Anyang-si**
**Gyeonggi-do 431-080 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(56) References cited:
**WO-A1-2009/009364**   **WO-A1-2011/130630**
**WO-A1-2012/044693**   **KR-A- 20010 018 843**
**KR-A- 20020 037 291**   **KR-A- 20020 075 107**
**KR-A- 20100 032 437**

**Description**

[Technical Field]

The present invention relates to a wireless communication system and, more particularly, to a method for transmitting a user equipment (UE) detection signal for device-to-device communication in a wireless communication system and a device therefor.

[Background Art]

3GPP LTE (3rd generation partnership project long term evolution hereinafter abbreviated LTE) communication system is schematically explained as an example of a wireless communication system to which the present invention is applicable.

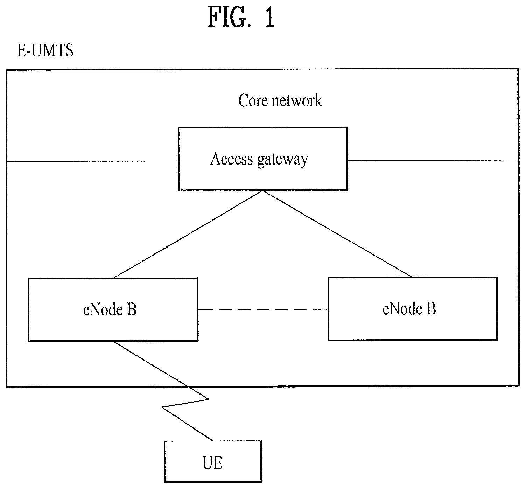

FIG. 1 is a schematic diagram of E-UMTS network structure as one example of a wireless communication system. E-UMTS (evolved universal mobile telecommunications system) is a system evolved from a conventional UMTS (universal mobile telecommunications system). Currently, basic standardization works for the E-UMTS are in progress by 3GPP. E-UMTS is called LTE system in general. Detailed contents for the technical specifications of UMTS and E-UMTS refers to release 7 and release 8 of "3rd generation partnership project; technical specification group radio access network", respectively.

Referring to FIG. 1, E-UMTS includes a user equipment (UE), an eNode B (eNB), and an access gateway (hereinafter abbreviated AG) connected to an external network in a manner of being situated at the end of a network (E-UTRAN). The eNode B may be able to simultaneously transmit multi data streams for a broadcast service, a multicast service and/or a unicast service.

One eNode B contains at least one cell. The cell provides a downlink transmission service or an uplink transmission service to a plurality of user equipments by being set to one of 1.25 MHz, 2.5 MHz, 5 MHz, 10 MHz, 15 MHz, and 20 MHz of bandwidths. Different cells can be configured to provide corresponding bandwidths, respectively. An eNode B controls data transmissions/receptions to/from a plurality of the user equipments. For a downlink (hereinafter abbreviated DL) data, the eNode B informs a corresponding user equipment of time/frequency region on which data is transmitted, coding, data size, HARQ (hybrid automatic repeat and request) related information and the like by transmitting DL scheduling information. And, for an uplink (hereinafter abbreviated UL) data, the eNode B informs a corresponding user equipment of time/frequency region usable by the corresponding user equipment, coding, data size, HARQ-related information and the like by transmitting UL scheduling information to the corresponding user equipment. Interfaces for user-traffic transmission or control traffic transmission may be used between eNode Bs. A core network (CN) consists of an AG (access gateway) and a network node for user registration of a user equipment and the like. The AG manages a mobility of the user equipment by a unit of TA (tracking area) consisting of a plurality of cells.

Wireless communication technologies have been developed up to LTE based on WCDMA. Yet, the ongoing demands and expectations of users and service providers are consistently increasing. Moreover, since different kinds of radio access technologies are continuously developed, a new technological evolution is required to have a future competitiveness. Cost reduction per bit, service availability increase, flexible frequency band use, simple structure/open interface and reasonable power consumption of user equipment and the like are required for the future competitiveness.

[Disclosure]

[Technical Problem]

An object of the present invention devised to solve the problem lies in a method for transmitting a user equipment (UE) detection signal for device-to-device communication in a wireless communication system and a device therefor.

[Technical Solution]

The object of the present invention can be achieved by providing a method for transmitting and receiving a discovery signal for device-to-device communication in a wireless communication system including transmitting the discovery signal in a first sub time unit included in a first time unit and transmitting the discovery signal in a second sub time unit included in a second time unit, wherein the time unit is composed of a plurality of sub time units, and wherein the second sub time unit is obtained by shifting an index by a sub time unit having a predetermined size in the first sub time unit.

user equipments. For a downlink (hereinafter abbreviated DL) data, the eNode B informs a corresponding user equipment of time/frequency region on which data is transmitted, coding, data size, HARQ (hybrid automatic repeat and request) related information and the like by transmitting DL scheduling information. And, for an uplink (hereinafter abbreviated UL) data, the eNode B informs a corresponding user equipment of time/frequency region usable by the corresponding user equipment, coding, data size, HARQ-related information and the like by transmitting UL scheduling information to the corresponding user equipment. Interfaces for user-traffic transmission or control traffic transmission may be used between eNode Bs. A core network (CN) consists of an AG (access gateway) and a network node for user registration of a user equipment and the like. The AG manages a mobility of the user equipment by a unit of TA (tracking area) consisting of a plurality of cells.

Wireless communication technologies have been developed up to LTE based on WCDMA. Yet, the ongoing demands and expectations of users and service providers are consistently increasing. Moreover, since different kinds of radio access technologies are continuously developed, a new technological evolution is required to have a future competitiveness. Cost reduction per bit, service availability increase, flexible frequency band use, simple structure/open interface and reasonable power consumption of user equipment and the like are required for the future competitiveness.

WO 2011/130630 A1 refers to techniques for performing peer discovery to enable peer-to-peer (P2P) communication. In an aspect, a proximity detection signal used for peer discovery may be generated based on one or more physical channels and/or signals used in a wireless network. In one design, a user equipment (UE) may generate a proximity detection signal occupying at least one resource block based on a SC-FDMA modulation technique. In another design, the UE may generate a proximity detection signal occupying at least one resource block based on an OFDMA modulation technique. The UE may generate SC-FDMA symbols or OFDMA symbols in different manners for different physical channels. In yet another design, the UE may generate a proximity detection signal including a primary synchronization signal and a secondary synchronization signal. For all designs, the UE may transmit the proximity detection signal to indicate its presence and to enable other UEs to detect the UE. Reference is also described in WO 2009/009364 A1.

[Disclosure]

[Technical Problem]

An object of the present invention devised to solve the problem lies in a method for transmitting a user equipment (UE) detection signal for device-to-device communication in a wireless communication system and a device therefor.

[Technical Solution]

The object of the present invention can be achieved by providing a method for transmitting discovery signals for a device-to-device communication by a user equipment in a wireless communication system according to independent claim 1.

In another aspect of the present invention, provided herein is a user equipment (UE) apparatus for performing device-to-device communication in a wireless communication system according to independent claim 4.

Preferred embodiments of the present invention are set out in the dependent claims.

[Advantageous Effects]

According to embodiments of the present invention, it is possible to more efficiently transmit and receive a user equipment (UE) detection signal for device-to-device communication in a wireless communication system.

It will be appreciated by persons skilled in the art that that the effects that can be achieved through the present invention are not limited to what has been particularly described hereinabove and other advantages of the present invention will be more clearly understood from the following detailed description.

[Description of Drawings]

FIG. 1 is a diagram showing a network structure of an Evolved Universal Mobile Telecommunications System (E-UMTS) as an example of a wireless communication system.

FIG. 2 is a diagram showing a control plane and a user plane of a radio interface protocol architecture between a User Equipment (UE) and an Evolved Universal Terrestrial Radio Access Network (E-UTRAN) based on a 3rd Generation Partnership Project (3GPP) radio access network standard.

FIG. 3 is a diagram showing physical channels used in a 3GPP system and a general signal transmission method using the same.

FIG. 4 is a diagram showing the structure of a downlink radio frame used in a Long Term Evolution (LTE) system.

FIG. 5 is a diagram showing the structure of an uplink subframe used in an LTE system.

FIG. 6 is a diagram illustrating the concept of direct communication between UEs.

FIG. 7 is a diagram showing an example of resources periodically allocated for the purpose of transmitting a discovery signal according to an embodiment of the present invention.

FIG. 8 is a diagram showing another example of resources periodically allocated for the purpose of transmitting a discovery signal according to an embodiment of the present invention.

FIG. 9 is a diagram showing an example of dividing a time domain of one discovery subframe into a plurality of discovery parts according to an embodiment of the present invention.

FIG. 10 is a diagram showing an example of randomly allocating transmit/receive instances of a discovery signal to a plurality of UEs according to an embodiment of the present invention.

FIG. 11 is a diagram showing a double resource structure composed of a discovery subframe and a discovery part according to an embodiment of the present

A physical layer, which is a 1st layer, provides higher layers with an information transfer service using a physical channel. The physical layer is connected to a medium access control layer situated above via a transport channel (trans antenna port channel). Data moves between the medium access control layer and the physical layer on the transport channel. Data moves between a physical layer of a transmitting side and a physical layer of a receiving side on the physical channel. The physical channel utilizes time and frequency as radio resources. Specifically, the physical layer is modulated by OFDMA (orthogonal frequency division multiple access) scheme in DL and the physical layer is modulated by SC-FDMA (single carrier frequency division multiple access) scheme in UL.

Medium access control (hereinafter abbreviated MAC) layer of a 2nd layer provides a service to a radio link control (hereinafter abbreviated RLC) layer, which is a higher layer, on a logical channel. The RLC layer of the 2nd layer supports a reliable data transmission. The function of the RLC layer may be implemented by a function block within the MAC. PDCP (packet data convergence protocol) layer of the 2nd layer performs a header compression function to reduce unnecessary control information, thereby efficiently transmitting such IP packets as IPv4 packets and IPv6 packets in a narrow band of a radio interface.

Radio resource control (hereinafter abbreviated RRC) layer situated in the lowest location of a 3rd layer is defined on a control plane only. The RRC layer is responsible for control of logical channels, transport channels and physical channels in association with a configuration, a re-configuration and a release of radio bearers (hereinafter abbreviated RBs). The RB indicates a service provided by the 2nd layer for a data delivery between the user equipment and the network. To this end, the RRC layer of the user equipment and the RRC layer of the network exchange a RRC message with each other. In case that there is an RRC connection (RRC connected) between the user equipment and the RRC layer of the network, the user equipment lies in the state of RRC connected (connected mode). Otherwise, the user equipment lies in the state of RRC idle (idle mode). A non-access stratum (NAS) layer situated at the top of the RRC layer performs such a function as a session management, a mobility management and the like.

A single cell consisting of an eNode B (eNB) is set to one of 1.25 MHz, 2.5 MHz, 5 MHz, 10 MHz, 15 MHz, and 20 MHz of bandwidths and then provides a downlink or uplink transmission service to a plurality of user equipments. Different cells can be configured to provide corresponding bandwidths, respectively.

DL transport channels for transmitting data from a network to a user equipment include a BCH (broadcast channel) for transmitting a system information, a PCH (paging channel) for transmitting a paging message, a downlink SCH (shared channel) for transmitting a user traffic or a control message and the like. DL multicast/ broadcast service traffic or a control message may be transmitted on the DL SCH or a separate DL MCH (multicast channel). Meanwhile, UL transport channels for transmitting data from a user equipment to a network include a RACH (random access channel) for transmitting an initial control message, an uplink SCH (shared channel) for transmitting a user traffic or a control message. A logical channel, which is situated above a transport channel and mapped to the transport channel, includes a BCCH (broadcast channel), a PCCH (paging control channel), a CCCH (common control channel), a MCCH (multicast control channel), a MTCH (multicast traffic channel) and the like.

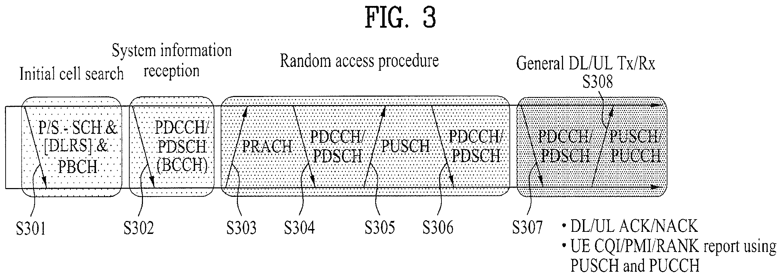

FIG. 3 is a diagram for explaining physical channels used for 3GPP system and a general signal transmission method using the physical channels.

If a power of a user equipment is turned on or the user equipment enters a new cell, the user equipment may perform an initial cell search job for matching synchronization with an eNode B and the like [S301]. To this end, the user equipment may receive a primary synchronization channel (P-SCH) and a secondary synchronization channel (S-SCH) from the eNode B, may be synchronized with the eNode B and may then obtain information such as a cell ID and the like. Subsequently, the user equipment may receive a physical broadcast channel from the eNode B and may be then able to obtain intra-cell broadcast information. Meanwhile, the user equipment may receive a downlink reference signal (DL RS) in the initial cell search step and may be then able to check a DL channel state.

Having completed the initial cell search, the user equipment may receive a physical downlink shared control channel (PDSCH) according to a physical downlink control channel (PDCCH) and an information carried on the physical downlink control channel (PDCCH). The user equipment may be then able to obtain a detailed system information [S302].

Meanwhile, if a user equipment initially accesses an eNode B or does not have a radio resource for transmitting a signal, the user equipment may be able to perform a random access procedure to complete the access to the eNode B [S303 to S306]. To this end, the user equipment may transmit a specific sequence as a preamble on a physical random access channel (PRACH) [S303/S305] and may be then able to receive a response message on PDCCH and the corresponding PDSCH in response to the preamble [S304/S306]. In case of a contention based random access procedure (RACH), it may be able to additionally perform a contention resolution procedure.

Having performed the above mentioned procedures, the user equipment may be able to perform a PDCCH/PDSCH reception [S307] and a PUSCH/PUCCH (physical uplink shared channel/physical uplink control channel) transmission [S308] as a general uplink/downlink signal transmission procedure. In particular, the user equipment receives a DCI (downlink control information) on the PDCCH. In this case, the DCI contains such a control information as an information on resource allocation to the user equipment. The format of the DCI varies in accordance with its purpose.

Meanwhile, control information transmitted to an eNode B from a user equipment via UL or the control information received by the user equipment from the eNode B includes downlink/uplink ACK/NACK signals, CQI (Channel Quality Indicator), PMI (Precoding Matrix Index), RI (Rank Indicator) and the like. In case of 3GPP LTE system, the user equipment may be able to transmit the aforementioned control information such as CQI/PMI/RI and the like on PUSCH and/or PUCCH.

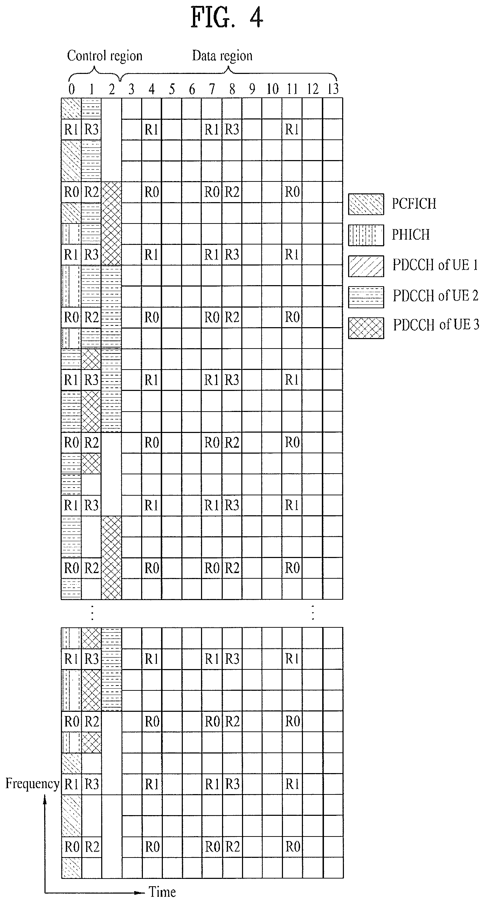

FIG. 4 illustrates exemplary control channels included in a control region of a subframe in a DL radio frame.

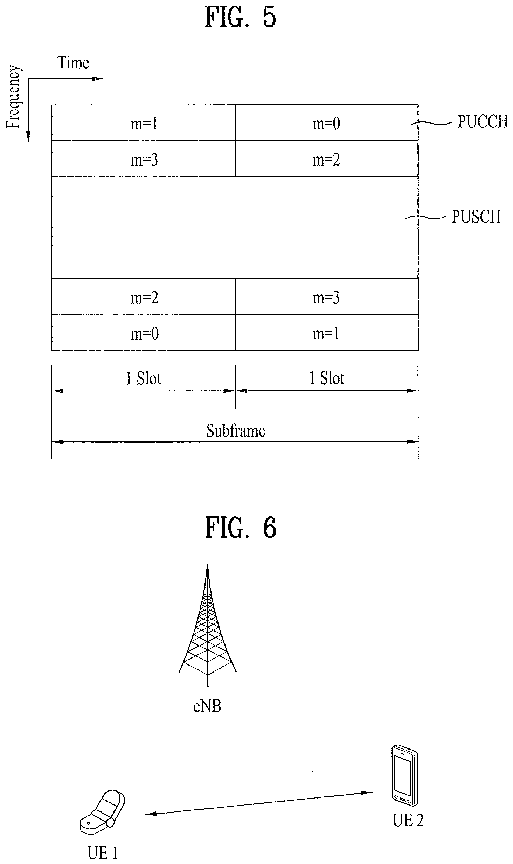

Referring to FIG. 4, a subframe includes 14 OFDM symbols. The first one to three OFDM symbols of a subframe are used for a control region and the other 13 to 11 OFDM symbols are used for a data region according to a subframe configuration. In FIG. 5, reference characters R1 to R4 denote RSs or pilot signals for antenna 0 to antenna 3. RSs are allocated in a predetermined pattern in a subframe irrespective of the control region and the data region. A control channel is allocated to non-RS resources in the control region and a traffic channel is also allocated to non-RS resources in the data region. Control channels allocated to the control region include a Physical Control Format Indicator Channel (PCFICH), a Physical Hybrid-ARQ Indicator Channel (PHICH), a Physical Downlink Control Channel (PDCCH), etc.

The PCFICH is a physical control format indicator channel carrying information about the number of OFDM symbols used for PDCCHs in each subframe. The PCFICH is located in the first OFDM symbol of a subframe and configured with priority over the PHICH and the PDCCH. The PCFICH includes 4 Resource Element Groups (REGs), each REG being distributed to the control region based on a cell Identifier (ID). One REG includes 4 Resource Elements (REs). An RE is a minimum physical resource defined by one subcarrier by one OFDM symbol. The PCFICH is set to 1 to 3 or 2 to 4 according to a bandwidth. The PCFICH is modulated in Quadrature Phase Shift Keying (QPSK).

The PHICH is a physical Hybrid-Automatic Repeat and request (HARQ) indicator channel carrying an HARQ ACK/NACK for a UL transmission. That is, the PHICH is a channel that delivers DL ACK/NACK information for UL HARQ. The PHICH includes one REG and is scrambled cell-specifically. An ACK/NACK is indicated in one bit and modulated in Binary Phase Shift Keying (BPSK). The modulated ACK/NACK is spread with a Spreading Factor (SF) of 2 or 4. A plurality of PHICHs mapped to the same resources form a PHICH group. The number of PHICHs multiplexed into a PHICH group is determined according to the number of spreading codes. A PHICH (group) is repeated three times to obtain a diversity gain in the frequency domain and/or the time domain.

The PDCCH is a physical DL control channel allocated to the first n OFDM symbols of a subframe. Herein, n is 1 or a larger integer indicated by the PCFICH. The PDCCH occupies one or more CCEs. The PDCCH carries resource allocation information about transport channels, PCH and DL-SCH, a UL scheduling grant, and HARQ information to each UE or UE group. The PCH and the DL-SCH are transmitted on a PDSCH. Therefore, an eNB and a UE transmit and receive data usually on the PDSCH, except for specific control information or specific service data.

Information indicating one or more UEs to receive PDSCH data and information indicating how the UEs are supposed to receive and decode the PDSCH data are delivered on a PDCCH. For example, on the assumption that the Cyclic Redundancy Check (CRC) of a specific PDCCH is masked by Radio Network Temporary Identity (RNTI) "A" and information about data transmitted in radio resources (e.g. at a frequency position) "B" based on transport format information (e.g. a transport block size, a modulation scheme, coding information, etc.) "C" is transmitted in a specific subframe, a UE within a cell monitors, that is, blind-decodes a PDCCH using its RNTI information in a search space. If one or more UEs have RNTI "A", these UEs receive the PDCCH and receive a PDSCH indicated by "B" and "C" based on information of the received PDCCH.

A basic resource unit of a DL control channel is an REG. The REG includes four contiguous REs except for REs carrying RSs. A PCFICH and a PHICH include 4 REGs and 3 REGs, respectively. A PDCCH is configured in units of a Control Channel Element (CCE), each CCE including 9 REGs.

FIG. 5 illustrates a structure of a UL subframe in the LTE system.

Referring to FIG. 5, a UL subframe may be divided into a control region and a data region. A Physical Uplink Control Channel (PUCCH) including Uplink Control Information (UCI) is allocated to the control region and a Physical uplink Shared Channel (PUSCH) including user data is allocated to the data region. The middle of the subframe is allocated to the PUSCH, while both sides of the data region in the frequency domain are allocated to the PUCCH. Control information transmitted on the PUCCH may include an HARQ ACK/NACK, a CQI representing a downlink channel state, an RI for MIMO, a Scheduling Request (SR) requesting UL resource allocation. A PUCCH for one UE occupies one RB in each slot of a subframe. That is, the two RBs allocated to the PUCCH are frequency-hopped over the slot boundary of the subframe. Particularly, PUCCHs with m=0, m=1, m=2, and m=3 are allocated to a subframe in FIG. 5.

FIG. 6 is a diagram illustrating the concept of direct communication between UEs.

Referring to FIG. 6, in device-to-device (D2D) communication in which a UE directly performs wireless communication with another UE, that is, in direct communication between UEs, an eNB may transmit a scheduling message indicating D2D transmission and reception. A UE participating in D2D communication receives the D2D scheduling message from the eNB and performs transmission and reception operation indicated by the D2D scheduling message.

In the present invention, as shown in FIG. 6, a method for detecting a UE which is a communication counterpart when a UE performs D2D communication with another UE using a direct radio channel is proposed. Although the UE means a terminal of a user, a network entity such as an eNB may be regarded as a UE when the network entity transmits and receives a signal to and from a UE.

As described with reference to FIG. 6, the UE first determines whether a counterpart UE exists in a D2D communication region in order to perform D2D communication. A process of determining whether a target UE exists is referred to as device discovery or device detection. Such device discovery is performed by transmitting a specific signal by one UE and detecting the specific signal by another UE, and a signal transmitted and detected by a UE for discovery is referred to as a discovery signal.

As the discovery signal, a variety of signals defined for existing cellular communication, e.g., a demodulation-reference signal (DM-RS) for physical random access channel (PRACH) preamble or PUSCH demodulation in a 3GPP LTE system, a sounding RS transmitted by a UE for acquisition of channel state information (CSI), etc. may be reused or a new signal optimized for the purpose of discovery may be used. Since transmission and reception operation of a discovery signal may cause interference with another link or another channel in a wireless network and impose a restriction on operation of a UE participating in transmission and reception, e.g., communication with an eNB, discovery operation is preferably performed under control of the eNB. For example, the eNB may instruct a specific UE (hereinafter, UE #1) to transmit a discovery signal and instruct another UE (hereinafter, UE #2) to receive the discovery signal via an appropriate control signal, thereby performing device discovery. Transmission and reception operation of the discovery signal may be periodically or aperiodically performed.

First, a periodic discovery signal is used when UE #1 periodically transmits a discovery signal and UE #2 detects the discovery signal of UE #1 at a transmit instance to perform device discovery. The periodic discovery signal is suitable when UE #1 directly transmits a large amount of data to UE #2 or when UE #1 transmits a signal such as advertisements to a plurality of nonspecific UEs #2.

In contrast, in the case of transmitting an aperiodic discovery signal, since UE #1 transmits a discovery signal only at a specific transmit instance indicated by an eNB via physical layer control information such as a PDCCH, the eNB should dynamically notify UE #2 of a signal transmit instance for discovery signal discovery. Such an aperiodic method may be used when a small amount of data is intermittently exchanged between UEs or when a discovery process is performed again due to rapid change in channel state during device-to-device communication.

Hereinafter, assume that an eNB periodically allocates a specific subframe for the purpose of transmitting a discovery signal.

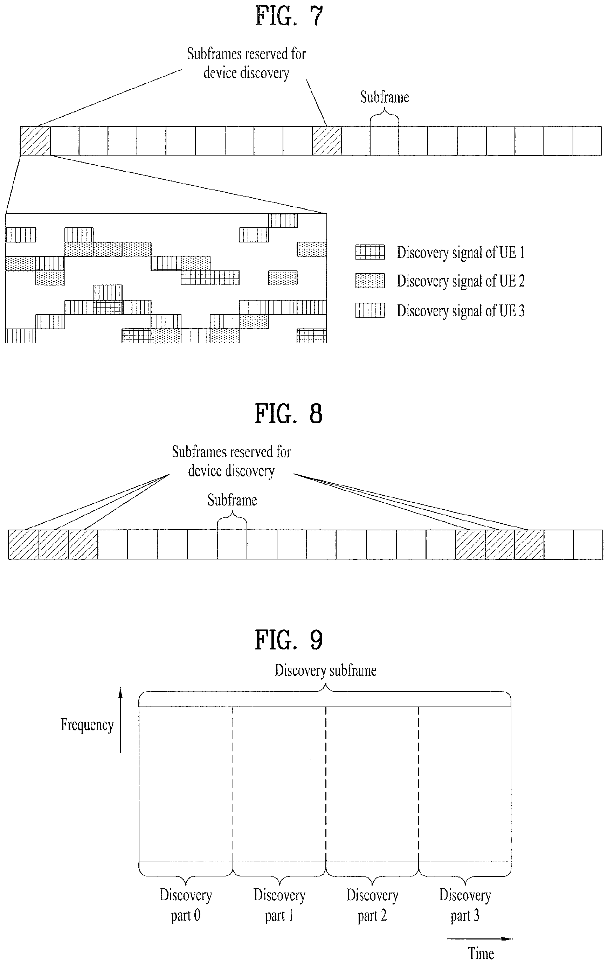

FIG. 7 is a diagram showing an example of resources periodically allocated for the purpose of transmitting a discovery signal according to an embodiment of the present invention.

Referring to FIG. 7, discovery signals transmitted by UEs may partially or wholly overlap. The discovery signal transmitted by each UE may be expressed in the form of a codeword obtained by performing channel coding with respect to information bits such as a UE ID or in the form of a pseudo random sequence induced from information bits such as a UE ID according to a predetermined rule.

Although it is assumed that discovery operation is performed in subframe units and discovery subframes are uniformly distributed in FIG. 7, the present invention is not limited to thereto.

FIG. 8 is a diagram showing another example of resources periodically allocated for the purpose of transmitting a discovery signal according to an embodiment of the present invention. Referring to FIG. 8, a plurality of discovery subframes may be continuously arranged and a pattern of continuously arranged discovery subframes may have a predetermined cycle. The eNB may signal information about a discovery subframe cycle, an offset and the number of times of continuous allocation to a UE.

FIG. 9 is a diagram showing an example of dividing a time domain of one discovery subframe into a plurality of discovery parts according to an embodiment of the present invention.

Referring to FIG. 9, a time domain of one discovery subframe may be divided into a plurality of discovery parts and a discovery signal may be transmitted and received in discovery part units. In particular, the discovery part may match a slot unit of an LTE system such that two discovery parts are included in one subframe.

Hereinafter, an operation of the present invention will be described on the assumption that transmission and reception of a discovery signal is performed in subframe units. If a plurality of discovery parts is included in a single discovery subframe as shown in FIG. 9, the operation of the present invention may be performed such that transmission and reception of a discovery signal is performed in discovery part units.

In general, a UE may not simultaneously perform transmission and reception at the same frequency band because a signal transmitted by the UE strongly interferes with a signal received by the UE. Accordingly, if a specific UE transmits a discovery signal on a specific subframe, the specific UE may not receive a discovery signal of another UE simultaneously transmitted on the specific subframe.

If a specific UE wishes to receive a discovery signal of another UE while transmitting a discovery signal thereof, a discovery subframe is divided into two subsets such that the discovery signal is transmitted in one subset and the discovery signal is received in the other subset. In this case, if the subset in which the specific UE transmits the discovery signal matches the subset in which another UE transmits the discovery signal, the two UEs cannot obtain opportunities to detect mutual discovery signals. As a result, it is impossible to determine whether device-to-device communication is possible.

In order to solve such a problem, the present invention proposes a method for randomly determining whether each UE transmits a discovery signal thereof or receives a discovery signal of another UE in a region designated as transmission resource of a discovery signal to prevent different UEs from equally setting transmission and reception of a discovery signal.

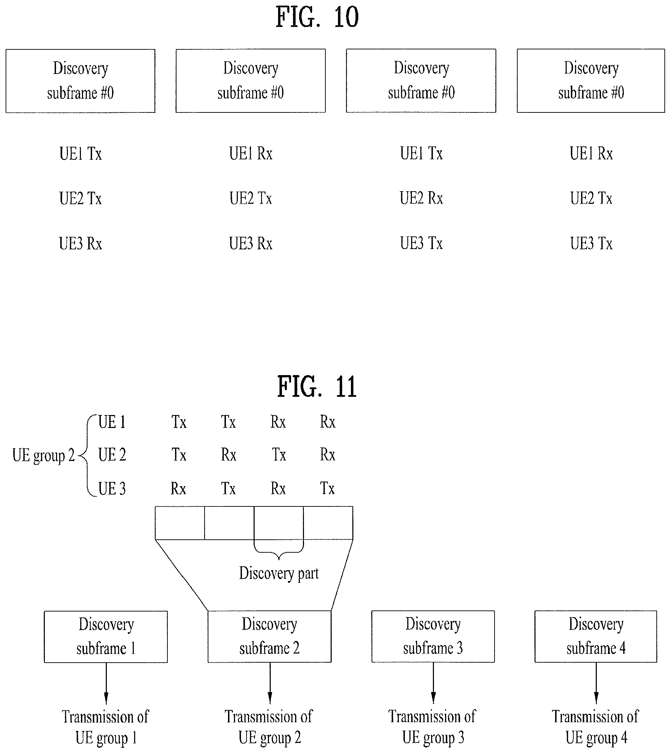

FIG. 10 is a diagram showing an example of randomly allocating a transmit/receive instances of a discovery signal to a plurality of UEs according to an embodiment of the present invention. Referring to FIG. 10, it can be seen that three UEs randomly perform transmission or reception such that all UEs may receive a signal of another UE at least once.

More specifically, as an operation for randomly determining transmission and reception of the discovery signal per UE, each UE may randomly generate an event in every discovery subframe to perform transmission with a probability value of P and to perform reception with a probability value of (1-P). The probability value P to be used herein may be determined by the eNB and may be broadcast to the UE, which will participate in device discovery, along with a message indicating a discovery subframe.

In addition, the probability value P may be changed by the number of UEs participating in device discovery. For example, if a small number of UEs participates in device discovery, the number of discovery signals to be received by each UE is small. Thus, it is advantageous that transmission of a discovery signal is performed on more subframes to finish device discovery early. If a large number of UEs participates in device discovery, the number of discovery signals to be received by each UE is large. Thus, all desired UEs can be found within a predetermined time by performing reception operation of the discovery signal on more subframes.

In addition, this probability value may be differently given according to the type of a service performed by the UE via device discovery. For example, a UE, which transmits a message such as advertisements to a plurality of nonspecific UEs adjacent thereto, does not need to receive a discovery signal of another UE and should transmit a discovery signal thereof. Accordingly, the probability value P is preferably relatively high. In contrast, since a UE, which performs one-to-one communication with a specific UE, not only transmits a discovery signal thereof but also receives a signal of a counterpart UE, the probability value P is preferably relatively low. Therefore, UEs participating in device discovery are grouped into a plurality of groups according to service type or UE ID and a probability value to be used for each group may be differently set. In particular, a UE, which does not receive a signal of another UE but broadcasts a signal thereof, does not need to receive a discovery signal of another UE. Thus, the probability value of such a UE may be set to 1.

The above-described probability value P may be changed according to selection of transmission and reception operation. For example, if a specific UE performs transmission operation on a specific discovery subframe, reception operation is performed on a next discovery subframe with a higher probability value, that is, a probability that transmission operation is performed is reduced, thereby aiding in reducing a time required for the specific UE to detect another UE.

Accordingly, when a probability value used in an n-th discovery subframe is P(n), after transmission operation has been performed on the n-th discovery subframe, a probability value P is updated in the form $P(n+1)=P(n)\times a$ $(0<a<1)$ or $P(n+1)=P(n)=a$ $(a<0)$ and transmission and reception operation on an $(n+1)$-th discovery subframe may be determined. Similarly, if reception operation is performed on the n-th discovery subframe, since transmission should be performed on the $(n+1)$-th subframe in order to aid in detection of another UE, the probability value P may be updated in the form of $P(n+1)=P(n)\times b$ $(b>1)$ or $P(n+1)=P(n)+b$ $(b>0)$.

In order to prevent the updated probability value P from being excessively increased or decreased, an upper limit and/or a lower limit may be set.

If transmission or reception is determined according to the above-described operation, transmission or reception operation may be continuously performed on several discovery subframes, increasing device discovery latency. In order to prevent this problem, an upper limit for continuous discovery transmission or reception may be defined. For example, if a specific UE continuously performs transmission on $N_T$ discovery subframes, the specific UE performs reception operation on a next discovery subframe regardless of the probability.

Similarly, if a specific UE continuously performs reception on $N_R$ discovery subframes, the specific UE performs transmission operation on a next discovery subframe regardless of the probability. $N_T$ and $N_R$ may be signaled by the eNB.

As another method, each UE may be defined to perform transmission or reception operation of a discovery signal predetermined times or more within N continuous discovery subframes. For example, each UE may be defined to perform transmission on at least one of N continuous discovery subframes.

As another example of randomly determining discovery signal transmission and reception per UE, each UE may generate a pseudo random sequence composed of 0s and 1s determined according to UE ID or service type, performs transmission (or reception) if an n-th number of the sequence is 0 and performs reception (or transmission) if the n-th number is 1. For example, if the pseudo random sequence is [10110], the UE receives the discovery signal on first, third and fourth discovery subframes and transmits the discovery signal on second and fifth discovery subframes.

In such operation, the UE may sequentially apply the pseudo random sequence to discovery subframes arranged after a specific reference time to determine transmission or reception operation of the discovery signal. In particular, the reference time may be designated as a first subframe of a radio frame having a system frame number of 0.

As a modification thereof, a UE may have one reference pseudo random sequence and determines transmission or reception of a discovery signal on each discovery subframe based on a sequence obtained by shifting the reference sequence by an offset determined according to UE ID, service type, cell ID, etc. Of course, the eNB may signal a reference sequence to be used.

Even in operation according to the above-described embodiment, it is not preferable that a specific UE continuously performs transmission operation or reception operation only. In order to prevent continuous transmission or reception operation, an upper limit of the number of discovery subframes, on which one UE continuously performs transmission of a discovery signal, or the number of discovery subframes, on which one UE continuously performs reception of a discovery signal, may be set.

For example, when a specific UE continuously performs transmission of a discovery signal on $N_T$ discovery subframes, reception operation of a discovery signal may be performed on a next discovery subframe regardless of the pseudo random sequence. Similarly, when a specific UE continuously performs reception of a discovery signal on $N_R$ discovery subframes, transmission operation of a discovery signal may be performed on a next discovery subframe regardless of the pseudo random sequence. $N_T$ and $N_R$ may be signaled by the eNB. Alternatively, if a predetermined number of 0s or 1s repeatedly appears when the pseudo random sequence is generated, 1 or 0 may be set to appear as a next sequence value thereof.

Additionally, even in generation of the pseudo random sequence, the transmission or reception probability of each UE may be adjusted by the eNB. More specifically, the eNB sends a parameter such as the above-described probability value P to the UE. This parameter is used as an input value for generating the pseudo random sequence and a sequence generator may be configured such that more 0s are generated as the probability value P is increased, that is, transmission operation of the discovery signal is performed on more discovery subframes.

Transmission operation of the discovery signal in selection of transmission or reception operation of the discovery signal is used to enable another UE to find the UE for transmitting the discovery signal as soon as possible to reduce battery power consumption. Accordingly, if transmission operation of the discovery signal is defined in a specific discovery subframe, the UE may be defined to necessarily transmit the discovery signal thereof. In contrast, since the necessity of reception operation of the discovery signal of another UE may be changed according to the type of the service used by each UE, reception operation of the discovery signal may not be necessary.

For example, although it has been determined that a specific UE performs reception operation of a discovery signal on a specific discovery subframe, if the specific UE does not need to receive the discovery signal of another UE, that is, if the specific UE has already found a desired UE, the specific UE does not receive the discovery signal to reduce battery power consumption or transmits the discovery signal thereof such that another UE finds the specific UE as soon as possible.

In other words, if the UE is determined to transmit the discovery signal, transmission operation is necessary. However, if the UE is determined to receive the discovery signal of another UE, this only means that the subframe may be used to receive the discovery signal and the operation of the UE may not be restricted. That is, the above-described discovery signal transmission subframe may be interpreted as a minimum subframe used when each UE transmits a discovery signal.

As shown in FIG. 9, if one subframe is divided into a plurality of discovery parts, the UE may apply the above-described embodiments to each discovery part. That is, it may be determined whether the discovery signal is transmitted or received in each discovery part with a predetermined probability or it may be determined whether the discovery signal is transmitted or received in each discovery part according to a specific sequence.

Alternatively, whether the discovery signal is transmitted at least once in each subframe is determined according to a predetermined probability or a specific sequence and transmission or reception of the discovery signal may be performed again in each discovery part of the subframe determined to perform transmission of the discovery signal according to a predetermined rule.

That is, if a first specific UE is determined to transmit a discovery signal on a specific subframe, the first UE transmits the discovery signal in some discovery parts of the specific subframe. If a second UE is determined to transmit a discovery signal on the specific subframe, at least one of the discovery parts used to transmit the discovery signal by the second UE may be different from the discovery parts of the first UE. To this end, the two UEs can find each other by transmitting the discovery signals at different times of one subframe. If a third UE is determined not to transmit a discovery signal on the specific subframe, the third UE only receives the discovery signal on the specific subframe to find another UE as soon as possible.

According to the double structure of the discovery subframe and the discovery part, a series of UE groups for commonly performing transmission on one discovery subframe is generated.

FIG. 11 is a diagram showing a double resource structure composed of a discovery subframe and a discovery part according to an embodiment of the present invention.

Referring to FIG. 11, four discovery subframes are defined in a time domain and all UEs are grouped into four UE groups such that signal transmission of each group is performed on one discovery subframe. In this case, when a specific UE group transmits a discovery signal on a specific discovery subframe, the remaining three UE groups perform reception operation only and thus the discovery signals of all UEs belonging to the transmission UE groups are detected. Discovery signal detection in the same UE group may be performed by enabling different UEs to perform transmission on at least one discovery part.

The double structure of the discovery subframe and the discovery part has an advantage that all discovery resources are flexibly adjusted according to the number of UEs for performing device-to-device communication. For example, if one discovery subframe may be configured per time T and only one discovery subframe is enough due to a small number of UEs for performing device-to-device communication, the number of UE groups may be set to 1. Accordingly, all UEs may operate to transmit the discovery signals on the same discovery subframe. In this case, the transmission discovery part of each UE may be appropriately determined within a single discovery subframe such that all UEs may be found within the time T.

In contrast, if the number of UEs for performing device-to-device communication is large and thus one discovery subframe is not enough, the UEs are grouped into L UE groups and each UE group may operate to transmit the discovery signal once at a time L×T. In this case, a time required to find all UEs increases. According to the above-described method, whether the UE group transmits the discovery signal on each subframe is determined according to a probability or a specific sequence determined from a UE group ID.

For such flexible operation, the eNB may signal the total number of UE groups via system information or a higher layer signal such as RRC. This is equal to the case in which, if each UE group alternately occupies one discovery subframe to transmit the discovery signal once, the eNB notifies each UE of on which discovery subframe the discovery signal may be transmitted once. In addition, each UE may check to which UE group each UE belongs according to a predetermined rule. For example, a remainder obtained by dividing the ID of each UE by the number L of the UE groups may be regarded as an index of the UE group to which each UE belongs. In this case, a UE, which wishes to detect a specific UE, may check the ID of the UE group, to which the UE belongs, and the location of the discovery subframe on which the UE transmits the discovery signal. In addition, since the discovery signal is attempted to be detected only on the corresponding discovery subframe, the battery may be more efficiently used.

In addition, since an opportunity for UEs belonging to the same UE group to detect the discovery signals of each other is reduced, it is not preferable that the UE group is continuously maintained. In order to solve this problem, the UE group may be periodically changed by adding time information such as a subframe index or a radio frame index as a parameter for determining the UE group. For example, if a total of L UE groups exists and each UE group occupies a discovery subframe once in L×T radio frames, $m = \left\lfloor \dfrac{n}{L \times T} \right\rfloor$ may be regarded as an index for reconfiguring a UE group at radio frame #n and the index of the UE group, to which each UE will belong, may be determined in consideration of this index and a UE ID.

More specifically, as shown in Equation 1 below, the UE ID may be converted into a parameter $Y_m$. In addition, a remainder obtained by dividing the parameter $Y_m$ by L may be taken as a UE group index. In Equation 1 below, A and D are predetermined constants.

Equation 1

$$Y_m = (A \cdot Y_{m-1}) \bmod D \quad (Y_{-1} = \text{UE ID})$$

If a specific UE is configured to transmit a discovery signal on a specific subframe in the double structure of the discovery subframe and the discovery part, whether transmission is performed in each discovery part may be determined according to a predetermined probability or a sequence determined by a UE ID. In addition, if resource division of frequency or code is performed even in one discovery part, which resources are used to transmit the discovery signal may be determined according to a predetermined probability or a sequence determined by a UE ID.

Such a double structure may include a discovery subframe group and a discovery subframe. That is, one UE group performs transmission on one subframe group and different UEs may perform transmission on different subframes in that group.

The above-described operation is applicable to an operation for combining a plurality of subframes to form one discovery frame (one discovery frame may be divided into a plurality of discovery parts) and determining whether the UE performs transmission in discovery frame units or discovery part units.

Operation for converting the UE ID into a time-variant parameter $Y_m$ and determining whether the discovery signal is transmitted or received based on the time-variant parameter may be used to calculate a UE group index or may be used for another purpose, that is, as a parameter for determining a sequence for determining the location of discovery signal transmission resources (e.g., the location of the discovery signal in the frequency domain if a plurality of discovery signals is divided in the frequency domain or an index indicating a sequence type if a plurality of discovery signals is distinguished by a sequence in the same frequency domain) or whether the discovery signal is transmitted.

In addition, the index m indicating the time may also indicate an index of a time unit, with which the parameter $Y_m$ is changed, and may be changed to a discovery part index, a subframe index, a radio frame index or a time-unit index of a combination of several discovery parts, subframes and radio frames. For example, if the location of resources used when the UE transmits the discovery signal or whether transmission is performed at each instance is determined according to the sequence determined from the parameter $Y_m$, m means an instance in which the sequence is repeated m times. If the sequence ends, m is updated to m+1 and the parameter $Y_m$ and the sequence are determined again such that the location of the resource to be used or whether transmission is performed at each instance are different from those of a previous sequence cycle. The location of the transmission resource of the discovery signal transmitted by a single UE and a transmit instance are changed with time, thereby preventing transmission from being unintentionally repeated using the same resource at the same instance.

In addition, operation for converting the UE ID into a time-variant parameter $Y_m$ and determining whether the discovery signal is transmitted or received based on the time-variant parameter may be defined such that each UE uses only one transmission resource at a specific instance.

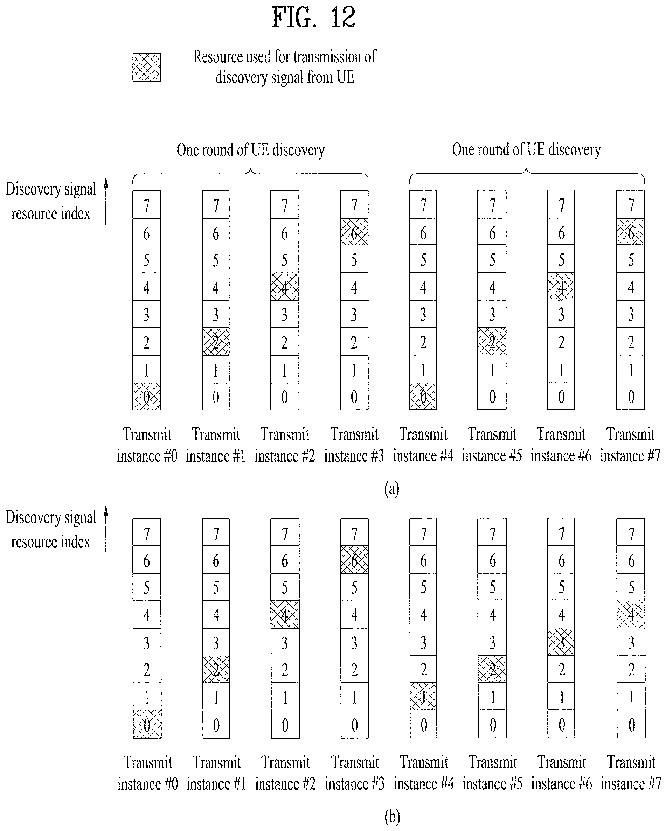

FIG. 12 is a diagram showing an example of performing transmission operation of a discovery signal according to an embodiment of the present invention. In particular, in FIG. 12, a discovery round means a series of time domains composed of one or more discovery signal transmit instances and one UE performs transmission at four transmit instances in one discovery round.

In FIG. 12(a), the location of a discovery signal transmission resource is determined from a UE ID to perform transmission at the same location in every discovery round. In contrast, in FIG. 12(b), the location of the transmission resource is determined by $Y_m$ such that the location of the transmission resource is changed in a next discovery round. Here, m may be defined as an index of a UE discovery round. That is, since the parameter $Y_m$ for determining the location of the transmission resource is changed according to the index value of every discovery round, the actually determined location of the transmission resource is changed according to the discovery round even when the location of the transmission resource is determined by the same UE ID.

Although only an instance in which a specific UE performs transmission in one discovery round is shown in FIG. 12, instances in which the specific UE does not transmit the discovery signal in the discovery round, that is, instances in which the specific UE receives the discovery signals of the other UEs, may also be present. In addition, the instance in which the specific UE transmits the discovery signal in one discovery round may be changed according to the discovery round index. That is, four transmit instances in a first discovery round and four transmit instances in a second discovery round may be different.

Alternatively, if the UE ID is converted into the time-variant parameter $Y_m$ and transmission or reception of the discovery signal is determined based on the time-variant parameter, each UE may be defined to appropriately select and use one of a plurality of transmission resources at a specific instance.

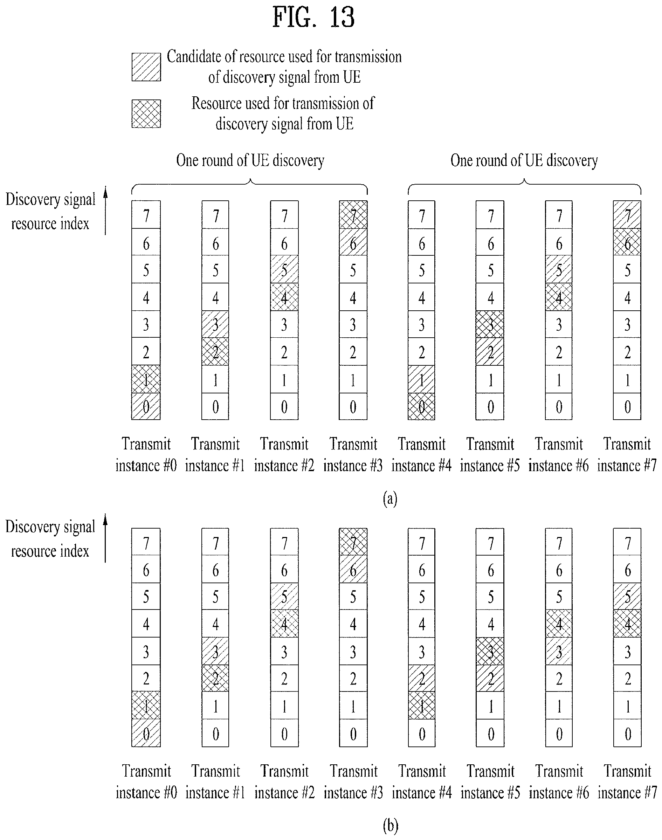

FIG. 13 is a diagram showing another example of performing transmission operation of a discovery signal according to an embodiment of the present invention.

Referring to transmit instance #0 of FIG. 13(a), two resources such as resource #0 and resource #1 may be determined as resource candidates used to transmit the discovery signal of the UE and the UE may appropriately select one resource and transmit a discovery signal. In FIG. 13, for convenience of description, assume that resource #1 is selected.

The locations of the resource candidates which may be used when the UE transmits the discovery signal may be changed in one discovery round as shown in FIG. 13(a) and may be repeated per discovery round. Alternatively, as shown in FIG. 13(b), the resource candidates may be set to be located at different locations in different discovery rounds.

The UE selects one resource from among a plurality of candidates at every transmit instance to transmit the discovery signal. At this time, a candidate having a lowest interference level is selected or one of candidates having a predetermined interference level or less is arbitrarily selected. A plurality of candidates appearing at one discovery signal transmit instance may be consecutively arranged or may be arranged at a predetermined interval such that the plurality of candidates is uniformly distributed in an entire resource region in order to select one from among maximally spaced resources if possible.

For example, if M candidates are uniformly distributed with respect to R resources, the location of an i-th candidate may be expressed as shown in Equation 2 below.

Equation 2

$$\left\{ a + \left\lfloor \frac{R \cdot i}{M} \right\rfloor \right\} \bmod R$$

In Equation 2, $\alpha$ is a parameter for determining the location of the candidate, which may be derived according to a predetermined rule.

Hereinafter, a detailed example of generating a sequence for determining whether transmission is performed at each discovery signal transmit instance according to a UE ID or a parameter derived therefrom will be described. For convenience of description, one discovery subframe is divided into several discovery parts as shown in FIG. 9.

As described with reference to FIG. 12, assume that a plurality of discovery subframes is combined to form one discovery round. In particular, assume that one discovery subframe is composed of N discovery parts respectively having indices of 0 to N-1 and one UE transmits a signal in one of the N discovery parts in one discovery subframe. In addition, assume that one discovery round is composed of K discovery subframes, wherein K may be equal to N which is the number of discovery parts in the discovery subframe.

On such assumption, if L UE groups are formed, the UEs belonging to the same UE group have the same discovery signal transmission sequence in one discovery round. The index of the UE group, to which the UE belongs, may be derived from the UE ID or the above-described parameter $Y_m$. In this case, m refers to the index of the discovery round.

For example, a UE group index 1 may be a remainder obtained by dividing the UE ID or $Y_m$ by the number L of UE groups. As another example, if the range of the numerals set as the UE ID or $Y_m$ is 0 to Q-1, consecutive Q/L numerals may belong to the same UE group. More specifically, the UE group index 1 may be expressed as shown in Equation 3 below.

Equation 3

$$l = \left\lfloor \frac{L \cdot Y_m}{Q} \right\rfloor$$

In Equation 3 above, the UE ID value may be input instead of $Y_m$. If Q/L is not an integer, a floor function or a ceiling function is performed or $Y_m$ or the UE ID may be divided by Q/L and then floored. In addition, as various methods, the UE group index may be derived from the parameter such as the UE ID or $Y_m$ to form a UE group.

More specifically, first, L UE groups may bundled to form N UE group bundles in a first discovery subframe and each UE group bundle transmits a signal in a discovery part. For example, UE groups 0, ..., and $\lfloor L/N \rfloor$-1 are regarded as one bundle to transmit a signal in a first discovery part and UE groups $\lfloor L/N \rfloor$, , ⋯, $2 \cdot \lfloor L/N \rfloor$-1 are regarded as another bundle to repeatedly perform signal transmission in a second discovery part.

Through this process, L UE groups are uniformly distributed in N discovery parts of the first discovery subframe to transmit the discovery signal once and each UE may receive the signals of the UE groups excluding the UE group, to which each UE belongs, once.

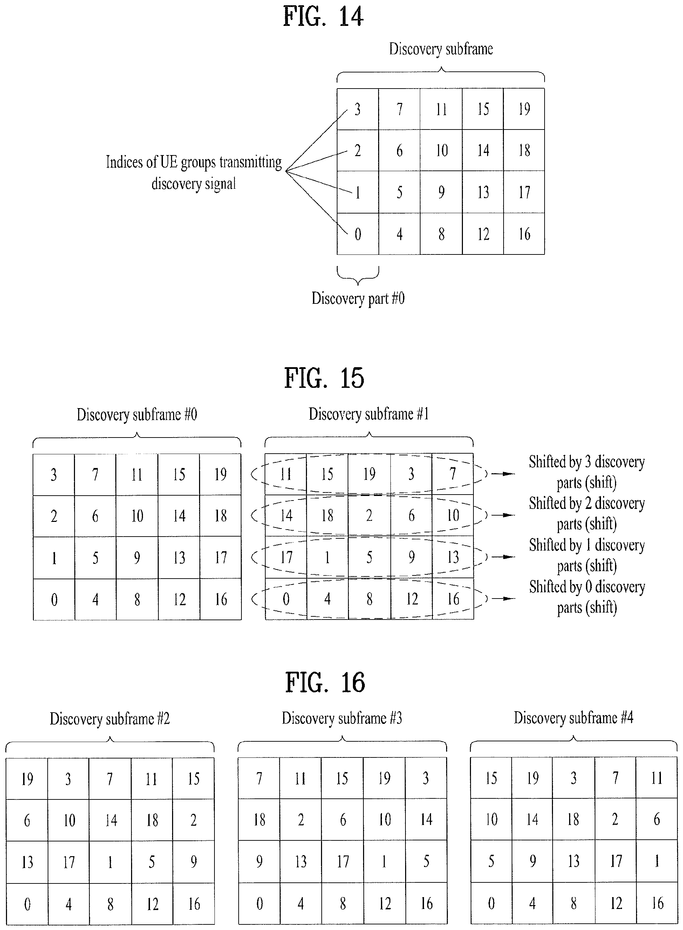

FIG. 14 is a diagram illustrating a method of transmitting a discovery signal according to an embodiment of the present invention. In particular, FIG. 14 shows operation in a first discovery subframe when 20 UE groups exist and the UE groups are bundled to configure N (=5) bundles.

In FIG. 14, each numeral indicated in a rectangle refers to an index of a UE group transmitting a discovery signal in a discovery part. That is, in discovery part #0, UE group #0, UE group #1, UE group #2 and UE group #3 transmit the discovery signals.

In addition, on a next discovery subframe, each UE group changes the index of the discovery part, in which the discovery signal is transmitted, such that transmission is performed at an instance different from that of a UE group which simultaneously performs transmission in a previous discovery subframe. Through this process, since the discovery signals are simultaneously transmitted, an opportunity to receive the discovery signals of another UE group, from which the discovery signals have not been received, may be acquired. In particular, as the location of the discovery part used to transmit the discovery signal on a specific discovery subframe, a location obtained by shifting the location used to transmit the discovery signal on a previous discovery subframe by a value given by a function of a UE group index, such that different UE groups may transmit the discovery signals at different locations.

FIG. 15 is a diagram illustrating a method of transmitting a discovery signal according to another embodiment of the present invention. In particular, FIG. 15 shows a discovery part in which each UE group transmits a signal in a next discovery subframe.

Referring to FIG. 15, the location of the discovery part in which the discovery signal is transmitted on a next discovery subframe is shifted by the remainder obtained by dividing UE group index #1 by R and the parameter R=L/N indicates the number of UE groups for simultaneously performing transmission in the discovery part. The parameter R may be appropriately adjusted by the eNB for the purpose of adjusting the number of UE groups for simultaneously performing transmission in one discovery part and may be delivered to the UE via RRC layer signaling or system information.

In particular, R UE groups for simultaneously transmitting the discovery signal in one discovery part may exclusively occupy N discovery parts of a next discovery subframe to mutually receive the signal. Accordingly, a method of fixing R to N is also possible.

In FIG. 15, in the case of UE group #1 for performing transmission using discovery part #n on a previous discovery subframe, the index of the discovery part used in the discovery subframe may be expressed as shown in Equation 4.

Equation 4

$$\text{index of discovery part} = \{(n + (l \bmod R)) \bmod N\}$$

Since FIG. 15 shows the discovery part in which each UE group transmits the signal on a next discovery subframe, it can be seen that the index of the UE group for performing transmission at discovery part #0 is changed to 0, 17, 14 and 11 at discovery subframe #1 as the result of shifting the discovery part. Accordingly, the UE for performing transmission in the same discovery part on discovery subframe #0 performs transmission at a different location on discovery subframe #1. Such operation may be repeated during several discovery subframes.

FIG. 16 is a diagram illustrating a method of transmitting a discovery signal according to another embodiment of the present invention. In particular, FIG. 16 shows operation on discovery subframes #2, #3 and #4.

Referring to FIG. 16, since the same transmission sequence as a first discovery subframe appears after N discovery subframes, one discovery round may be defined as N discovery subframes.

In summary, discovery part index #n transmitted by UE group #1 on discovery subframe #k may be expressed as shown in Equation 5 below.

Equation 5

$$n = \{\lfloor l / R \rfloor + (l \bmod R) \cdot k\} \bmod N$$

In Equation 5 above, R=L/N is a parameter indicating the number of UE groups for simultaneously performing transmission in one discovery part.

In addition, if index #k of the discovery subframe and index #n of the discovery part are combined to define one index n'=N·k+n (for, n'=0, 1, ..., K·N), an instance in which UE group #1 transmits a discovery signal may be expressed as shown in Equation 6 below.

Equation 6

$$n' = N \cdot j + \{\{\lfloor l / R \rfloor + (l \bmod R) \cdot j\} \bmod N\} \text{ for } j = 0,1,...., K - 1$$

If the above expression is described using a binary sequence composed of 0 and 1, a sequence having 1 at discovery part index #n' and having 0 at the other discovery part indices may be obtained and the signal may be transmitted in a discovery part having a sequence value of 1.

When the discovery signal is transmitted using the above-described method, if the number N of discovery parts per discovery subframe is a prime number, although UE group #1 shifts the transmission location of the discovery signal by (1 mod R) per discovery subframe, transmission is not performed again simultaneously with a UE group for simultaneously performing transmission in the past.

However, in general, the value N may not be a prime number. Even in this case, in order to prevent UE groups for simultaneously transmitting the discovery signals in one discovery round from simultaneously transmitting the discovery signals again, the value (I mode R) shifted in every discovery subframe is set to 0 or 1 or is relatively prime with N if (I mode R) is equal to or greater than 1.

In order to generalize this, when the index #k of the discovery subframe and the index #n of the discovery part are combined to define one index n'=N·k+n (for n'=0, 1, ..., K·N), an instance in which UE group #1 transmits the discovery signal may be expressed as shown in Equation 7 below.

Equation 7

$$n' = N \cdot j + \{\{\lfloor l / R \rfloor + j \cdot p(l \bmod R)\} \bmod N\} \text{ for } j = 0,1,...., K - 1$$

In Equation 7 above, R=L/N denotes the number of UE groups for simultaneously performing transmission in the discovery part, p(x) denotes a function indicating an x-th natural number which is relatively prime with N and p(0) has a value of 0. For example, if N is 6, p(0)=0, p(1)=1, p(2)=3 and p(3)=5. In this case, 2 and 4 are not relatively prime with N=6 and thus are excluded from p(x). In addition, if N=9, p(0)=0, p(1)=1, p(2)=2, p(3)=4, p(4)=5, p(5)=7 and p(6)=8 and 3 and 6 which are not relatively prime with N=9 are excluded from p(x). If N is a prime number, p(x)=x.

In the above-described method, a rule for deriving a discovery part index transmitted by UE group #l on discovery subframe #k, that is, a rule for shifting the discovery part per discovery subframe, is exemplary and the value for shifting the discovery part by each UE group may be changed. In order to generalize this, if the shift value of the discovery pat location used by UE group #l on discovery subframe #k is v(l, k), the discovery part index #n transmitted on discovery subframe #k may be expressed as shown in Equation 8 below.

Equation 8

$$n = \left\{ \lfloor l / R \rfloor + \sum_{i=0}^{k} v(l,k) \right\} \bmod N$$

In addition, if index #k of the discovery subframe and index #n of the discovery part are combined to define one index $n'=N \cdot k+n$, an instance in which UE group # 1 transmits the discovery signal may be expressed as shown in Equation 9 below.

Equation 9

$$n' = N \cdot j + \left\{ \left\{ \lfloor l / R \rfloor + \sum_{i=0}^{j} v(l,k) \right\} \bmod N \right\} \text{ for } j = 0,1,... K - 1$$

In Equation 9 above, the shift value v(l, k) of the discovery part location may be determined by the number L of UE groups or the number R of UE groups for simultaneously performing transmission.

As one method for implementing the shift value v(l, k) of the discovery part location, a sequence of predetermined shift values is defined as $w(x)$ for $x = 0,1,... K$-1, v(l, k) is defined in the form of w((l+k) mod K), and w(x) is circularly shifted according to the index of the UE group to acquire v(l, k).

In order to guarantee that the shift value v(l, k) of the discovery part location and the number N of discovery parts per discovery subframe become relatively prime according to the above-described principle, the sequence *w(x)* for *x*=0,1,....*K*-1 of the shift values may be composed of prime numbers. In particular, even when the number N of discovery parts per discovery subframe is an index of 2, w(x) may be expressed by a sequence of prime numbers excluding 2 in order to be restricted to numerals which are relatively prime.

As another example, if the number N of discovery parts per discovery subframe is restricted to an index of 2, w(x) is an add sequence. Even in this time, N and w(x) are always relatively prime. According to the above-described principle, 0 and 1 are treated as relatively prime with the number N of discovery parts per discovery subframe and may be included in w(x). The transmission location on discovery subframe #0 may also be in the form of a general function z(l) and, in this case, an instance in which the discovery signal is transmitted may be expressed as shown in Equation 10 below.

Equation 10

$$n' = N \cdot j + \left\{ \left\{ z(l) + \sum_{i=0}^{j} v(l,k) \right\} \bmod N \right\} \quad for \quad j = 0,1,....K-1$$

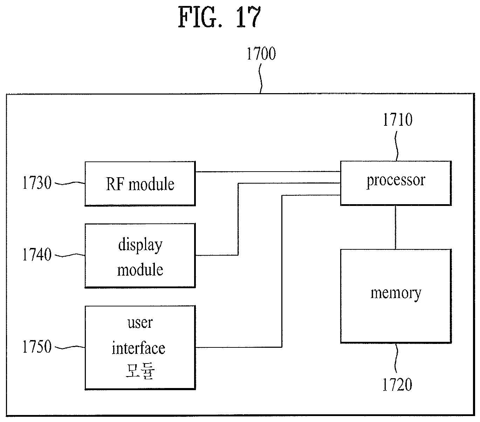

FIG. 17 is a block diagram for an example of a communication device according to one embodiment of the present invention.

Referring to FIG. 17, a communication device 1700 may include a processor 1710, a memory 1720, an RF module 1730, a display module 1740, and a user interface module 1750.

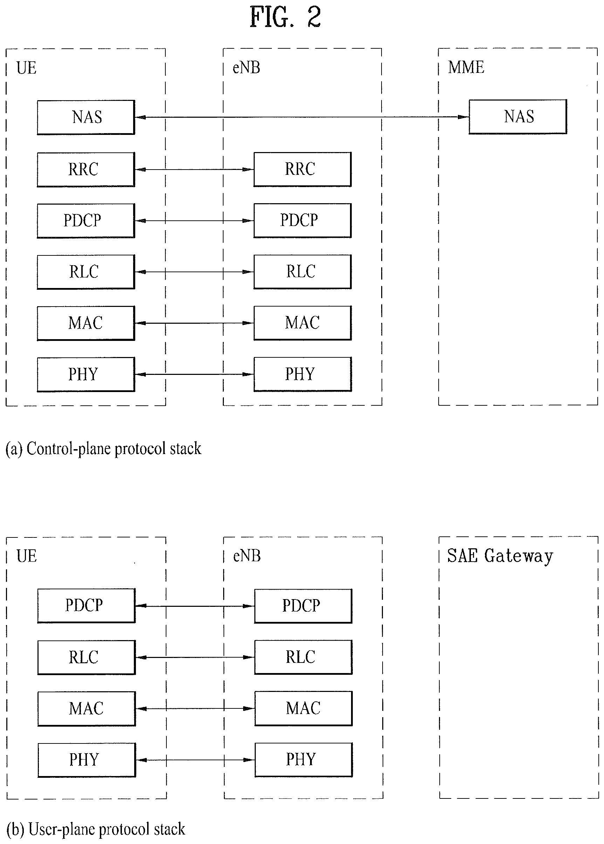

Since the communication device 1700 is depicted for clarity of description, prescribed module(s) may be omitted in part. The communication device 1700 may further include necessary module(s). And, a prescribed module of the communication device 1700 may be divided into subdivided modules. A processor 1710 is configured to perform an operation according to the embodiments of the present invention illustrated with reference to drawings. In particular, the detailed operation of the processor 1710 may refer to the former contents described with reference to FIG. 1 to FIG. 16.

The memory 1720 is connected with the processor 1710 and stores an operating system, applications, program codes, data, and the like. The RF module 1730 is connected with the processor 1710 and then performs a function of converting a baseband signal to a radio signal or a function of converting a radio signal to a baseband signal. To this end, the RF module 1730 performs an analog conversion, amplification, a filtering, and a frequency up conversion, or performs processes inverse to the former processes. The display module 1740 is connected with the processor 1710 and displays various kinds of informations. And, the display module 1740 can be implemented using such a well-known component as an LCD (liquid crystal display), an LED (light emitting diode), an OLED (organic light emitting diode) display and the like, by which the present invention may be non-limited. The user interface module 1750 is connected with the processor 1710 and can be configured in a manner of being combined with such a well-known user interface as a keypad, a touchscreen and the like.

The above-described embodiments correspond to combinations of elements and features of the present invention in prescribed forms. And, the respective elements or features may be considered as selective unless they are explicitly mentioned. Each of the elements or features can be implemented in a form failing to be combined with other elements or features. Moreover, it is able to implement an embodiment of the present invention by combining elements and/or features together in part. A sequence of operations explained for each embodiment of the present invention can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Embodiments of the present invention can be implemented using various means. For instance, embodiments of the present invention can be implemented using hardware, firmware, software and/or any combinations thereof. In the implementation by hardware, a method according to each embodiment of the present invention can be implemented by at least one selected from the group consisting of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, a method according to each embodiment of the present invention can be implemented by modules, procedures, and/or functions for performing the above-explained functions or operations. Software code is stored in a memory unit and is then drivable by a processor. The memory unit is provided within or outside the processor to exchange data with the processor through the various means known in public.

While the present invention has been described and illustrated herein with reference to the preferred embodiments thereof, it will be apparent to those skilled in the art that various modifications and variations can be made therein without departing from the scope of the invention. Thus, it is intended that the present invention covers the modifications and variations of this invention that come within the scope of the appended claims and their equivalents.

[Industrial Applicability]

Although an example in which a method for transmitting a user equipment (UE) detection signal for device-to-device communication in a wireless communication system and a device therefor are applied to a 3GPP LTE system is described, the present invention is applicable to various wireless communication systems in addition to the 3GPP LTE system.

**Claims**

1.  A method for transmitting discovery signals for a device-to-device communication by a user equipment, UE, in a wireless communication system, the method comprising:

    determining whether to transmit a first discovery signal or not in a first set of transmission resources based on a first probability value configured from a network;
    when it is determined to transmit the first discovery signal in the first set of transmission resources, selecting one transmission resource from the first set of transmission resources based on a second probability value;
    transmitting the first discovery signal using the one transmission resource selected from the first set of transmission resources to a target UE;
    determining whether to transmit a second discovery signal or not in a second set of transmission resources based on the first probability value;
    when it is determined to transmit the second discovery signal in the second set of transmission resources, selecting another transmission resource from the second set of transmission resources based on the second probability value; and
    transmitting the second discovery signal using the another transmission resource selected from the second set of transmission resources to the target UE.

2.  The method according to claim 1, wherein a time index of the another transmission resource is different from a time index of the one transmission resource as much as a predetermined value.

3.  The method according to claim 1, wherein a number of transmission resources included in the first and second sets of transmission resources is a prime number.

4.  A user equipment (1700), UE, for performing device-to-device communication in a wireless communication system, the UE apparatus comprising:

    a wireless communication module (1730) configured to transmit and receive a signal to and from a base station, BS, or a target UE; and
    a processor (1710) configured to process the signal,
    wherein the processor (1710) is configured to determine whether to transmit a first discovery signal or not in a first set of transmission resources based on a first probability value configured from the BS; select one transmission resource from the first set of transmission resources based on a second probability value when it is determined to transmit the first discovery signal in the first set of transmission resources, and control the wireless communication module to transmit the first discovery signal using the one transmission resource selected from the first set of transmission resources to the target UE, and
    wherein the processor (1710) is further configured to determine whether to transmit a second discovery signal or not in a second set of transmission resources based on the first probability value; select another transmission resource from the second set of transmission resources based on the second probability value when it is determined to transmit the second discovery signal in the second set of transmission resources, and control the wireless communication module to transmit the second discovery signal using the another transmission resource selected from the second set of transmission resources to the target UE.

5.  The UE (1700) according to claim 4, wherein a time index of the another transmission resource is different from a time index of the one transmission resource as much as a predetermined value.

**6.** The UE (1700) according to claim 4, wherein a number of transmission resources included in the first and second set of transmission resources is a prime number.

## Patentansprüche

**1.** Verfahren zum Senden von Entdeckungssignalen für eine Vorrichtung-zu-Vorrichtung-Kommunikation durch ein Endgerät, UE, in einem drahtlosen Kommunikationssystem, wobei das Verfahren umfasst:

Ermitteln, ob ein erstes Entdeckungssignal in einem ersten Satz von Senderessourcen zu senden ist oder nicht, auf Grundlage eines ersten Wahrscheinlichkeitswerts, der von einem Netzwerk konfiguriert wurde;
wenn ermittelt wird, das erste Entdeckungssignal im ersten Satz von Senderessourcen zu senden, Auswählen einer Senderessource aus dem ersten Satz von Senderessourcen auf Grundlage eines zweiten Wahrscheinlichkeitswerts;
Senden des ersten Entdeckungssignals unter Verwendung der einen Senderessource, die aus dem ersten Satz von Senderessourcen ausgewählt wurde, an ein Ziel-UE;
Ermitteln, ob ein zweites Entdeckungssignal in einem zweiten Satz von Senderessourcen zu senden ist oder nicht, auf Grundlage des ersten Wahrscheinlichkeitswerts;
wenn ermittelt wird, das zweite Entdeckungssignal im zweiten Satz von Senderessourcen zu senden, Auswählen einer weiteren Senderessource aus dem zweiten Satz von Senderessourcen auf Grundlage des zweiten Wahrscheinlichkeitswerts; und
Senden des zweiten Entdeckungssignals unter Verwendung der weiteren Senderessource, die aus dem zweiten Satz von Senderessourcen ausgewählt wurde, an das Ziel-UE.

**2.** Verfahren nach Anspruch 1, wobei sich ein Zeitindex der weiteren Senderessource von einem Zeitindex der einen Senderessource bis zu einem vorbestimmten Wert unterscheidet.

**3.** Verfahren nach Anspruch 1, wobei eine Anzahl der Senderessourcen, die im ersten und zweiten Satz von Senderessourcen enthalten sind, eine Primzahl ist.

**4.** Endgerät (1700), UE, zum Durchführen einer Vorrichtung-zu-Vorrichtung-Kommunikation in einem drahtlosen Kommunikationssystem, wobei die UE-Vorrichtung umfasst:

ein drahtloses Kommunikationsmodul (1730), das ausgelegt ist, ein Signal an eine Basisstation, BS, oder ein Ziel-UE zu senden und ein Signal von dieser bzw. diesem zu empfangen; und
einen Prozessor (1710), der konfiguriert ist, das Signal zu verarbeiten,
wobei der Prozessor (1710) ausgelegt ist, zu ermitteln, ob ein erstes Entdeckungssignal in einem ersten Satz von Senderessourcen zu senden ist oder nicht, auf Grundlage eines ersten Wahrscheinlichkeitswerts, der von der BS konfiguriert wurde; eine Senderessource aus dem ersten Satz von Senderessourcen auf Grundlage eines zweiten Wahrscheinlichkeitswerts auszuwählen, wenn ermittelt wird, dass das erste Entdeckungssignal im ersten Satz von Senderessourcen zu senden ist, und das drahtlose Kommunikationsmodul zu steuern, das erste Entdeckungssignal unter Verwendung der einen Senderessource, die aus dem ersten Satz von Senderessourcen ausgewählt wurde, an das Ziel-UE zu senden, und
wobei der Prozessor (1710) ferner ausgelegt ist, zu ermitteln, ob ein zweites Entdeckungssignal in einem zweiten Satz von Senderessourcen zu senden ist oder nicht, auf Grundlage des ersten Wahrscheinlichkeitswerts; eine weitere Senderessource aus dem zweiten Satz von Senderessourcen auf Grundlage des zweiten Wahrscheinlichkeitswerts auszuwählen, wenn ermittelt wird, dass das zweite Entdeckungssignal im zweiten Satz von Senderessourcen zu senden ist, und das drahtlose Kommunikationsmodul zu steuern, das zweite Entdeckungssignal unter Verwendung der weiteren Senderessource, die aus dem zweiten Satz von Senderessourcen ausgewählt wurde, an das Ziel-UE zu senden.

**5.** UE (1700) nach Anspruch 4, wobei sich ein Zeitindex der anderen Senderessource von einem Zeitindex der einen Senderessource bis zu einem vorbestimmten Wert unterscheidet.

**6.** UE (1700) nach Anspruch 4, wobei eine Anzahl der Senderessourcen, die im ersten und zweiten Satz von Senderessourcen enthalten sind, eine Primzahl ist.

**Revendications**

1. Procédé pour émettre des signaux de découverte pour une communication de dispositif à dispositif par un équipement utilisateur, UE, dans un système de communication sans fil, le procédé comprenant :

   déterminer s'il faut ou non émettre un premier signal de découverte dans un premier ensemble de ressources d'émission sur la base d'une première valeur de probabilité configurée à partir d'un réseau ;
   lorsqu'il est déterminé d'émettre le premier signal de découverte dans le premier ensemble de ressources d'émission, sélectionner une première ressource d'émission parmi le premier ensemble de ressources d'émission sur la base d'une seconde valeur de probabilité ;
   émettre le premier signal de découverte à l'aide de la première ressource d'émission sélectionnée parmi le premier ensemble de ressources d'émission à destination d'un UE cible ;
   déterminer s'il faut ou non émettre un second signal de découverte dans un second ensemble de ressources d'émission sur la base de la première valeur de probabilité ;
   lorsqu'il est déterminé d'émettre le second signal de découverte dans le second ensemble de ressources d'émission, sélectionner une autre ressource d'émission parmi le second ensemble de ressources d'émission sur la base de la seconde valeur de probabilité ; et
   émettre le second signal de découverte à l'aide de l'autre ressource d'émission sélectionnée parmi le second ensemble de ressources d'émission à destination de l'UE cible.

2. Procédé selon la revendication 1, dans lequel un indice temporel de l'autre ressource d'émission est différent d'un indice temporel de la première ressource d'émission à hauteur d'une valeur prédéterminée.

3. Procédé selon la revendication 1, dans lequel un nombre de ressources d'émission incluses dans les premier et second ensembles de ressources d'émission est un nombre premier.

4. Équipement utilisateur (1700), UE, pour réaliser une communication de dispositif à dispositif dans un système de communication sans fil, l'appareil d'UE comprenant :

   un module de communication sans fil (1730) configuré pour émettre et recevoir un signal à destination et en provenance d'une station de base, BS, ou d'un UE cible ; et
   un processeur (1710) configuré pour traiter le signal,
   le processeur (1710) étant configuré pour déterminer s'il faut ou non émettre un premier signal de découverte dans un premier ensemble de ressources d'émission sur la base d'une première valeur de probabilité configurée à partir de la BS ; sélectionner une première ressource d'émission parmi le premier ensemble de ressources d'émission sur la base d'une seconde valeur de probabilité lorsqu'il est déterminé d'émettre le premier signal de découverte dans le premier ensemble de ressources d'émission, et amener le module de communication sans fil à émettre le premier signal de découverte à l'aide de la première ressource d'émission sélectionnée parmi le premier ensemble de ressources d'émission à destination de l'UE cible, et
   le processeur (1710) étant en outre configuré pour déterminer s'il faut ou non émettre un second signal de découverte dans un second ensemble de ressources d'émission sur la base de la première valeur de probabilité ; sélectionner une autre ressource d'émission parmi le second ensemble de ressources d'émission sur la base de la seconde valeur de probabilité lorsqu'il est déterminé d'émettre le second signal de découverte dans le second ensemble de ressources d'émission, et amener le module de communication sans fil à émettre le second signal de découverte à l'aide de l'autre ressource d'émission sélectionnée parmi le second ensemble de ressources d'émission à destination de l'UE cible.

5. UE (1700) selon la revendication 4, dans lequel un indice temporel de l'autre ressource d'émission est différent d'un indice temporel de la première ressource d'émission à hauteur d'une valeur prédéterminée.

6. UE (1700) selon la revendication 4, dans lequel un nombre de ressources d'émission incluses dans les premier et second ensembles de ressources d'émission est un nombre premier.

# FIG. 1

E-UMTS

# FIG. 2

(a) Control-plane protocol stack

(b) User-plane protocol stack

## FIG. 3

Initial cell search — System information reception — Random access procedure — General DL/UL Tx/Rx S308

S301: P/S - SCH & [DL RS] & PBCH

S302: PDCCH/ PDSCH (BCCH)

S303: PRACH

S304: PDCCH/ PDSCH

S305: PUSCH

S306: PDCCH/ PDSCH

S307: PDCCH/ PDSCH

PUSCH/ PUCCH

• DL/UL ACK/NACK
• UE CQI/PMI/RANK report using PUSCH and PUCCH

# FIG. 4

# FIG. 5

Time →

Frequency ↓

| | | |
|---|---|---|
| m=1 | m=0 | ~ PUCCH |
| m=3 | m=2 | |
| | | ~ PUSCH |
| m=2 | m=3 | |
| m=0 | m=1 | |

|← 1 Slot →|← 1 Slot →|

|← Subframe →|

# FIG. 6

eNB

UE 1

UE 2

## FIG. 7

Subframes reserved for
device discovery

Subframe

Discovery signal of UE 1
Discovery signal of UE 2
Discovery signal of UE 3

## FIG. 8

Subframes reserved for
device discovery

Subframe

## FIG. 9

Discovery subframe

Frequency

Discovery
part 0

Discovery
part 1

Discovery
part 2

Discovery
part 3

Time

# FIG. 10

| Discovery subframe #0 | Discovery subframe #0 | Discovery subframe #0 | Discovery subframe #0 |
|---|---|---|---|
| UE1 Tx | UE1 Rx | UE1 Tx | UE1 Rx |
| UE2 Tx | UE2 Tx | UE2 Rx | UE2 Tx |
| UE3 Rx | UE3 Rx | UE3 Tx | UE3 Tx |

# FIG. 11

UE group 2 {
UE 1    Tx    Tx    Rx    Rx
UE 2    Tx    Rx    Tx    Rx
UE 3    Rx    Tx    Rx    Tx
}

Discovery part

| Discovery subframe 1 | Discovery subframe 2 | Discovery subframe 3 | Discovery subframe 4 |
|---|---|---|---|
| Transmission of UE group 1 | Transmission of UE group 2 | Transmission of UE group 3 | Transmission of UE group 4 |

EP 2 871 888 B1

# FIG. 12

Resource used for transmission of
discovery signal from UE

One round of UE discovery            One round of UE discovery

Discovery signal
resource index

(a)

Transmit instance #0, Transmit instance #1, Transmit instance #2, Transmit instance #3, Transmit instance #4, Transmit instance #5, Transmit instance #6, Transmit instance #7

Discovery signal
resource index

(b)

Transmit instance #0, Transmit instance #1, Transmit instance #2, Transmit instance #3, Transmit instance #4, Transmit instance #5, Transmit instance #6, Transmit instance #7

# FIG. 13

# FIG. 14

Discovery subframe

Indices of UE groups transmitting discovery signal

| 3 | 7 | 11 | 15 | 19 |
|---|---|----|----|----|
| 2 | 6 | 10 | 14 | 18 |
| 1 | 5 | 9  | 13 | 17 |
| 0 | 4 | 8  | 12 | 16 |

Discovery part #0

# FIG. 15

Discovery subframe #0

| 3 | 7 | 11 | 15 | 19 |
|---|---|----|----|----|
| 2 | 6 | 10 | 14 | 18 |
| 1 | 5 | 9  | 13 | 17 |
| 0 | 4 | 8  | 12 | 16 |

Discovery subframe #1

| 11 | 15 | 19 | 3 | 7  |
|----|----|----|---|----|
| 14 | 18 | 2  | 6 | 10 |
| 17 | 1  | 5  | 9 | 13 |
| 0  | 4  | 8  | 12 | 16 |

Shifted by 3 discovery parts (shift)

Shifted by 2 discovery parts (shift)

Shifted by 1 discovery parts (shift)

Shifted by 0 discovery parts (shift)

# FIG. 16

Discovery subframe #2

| 19 | 3  | 7  | 11 | 15 |
|----|----|----|----|----|
| 6  | 10 | 14 | 18 | 2  |
| 13 | 17 | 1  | 5  | 9  |
| 0  | 4  | 8  | 12 | 16 |

Discovery subframe #3

| 7  | 11 | 15 | 19 | 3  |
|----|----|----|----|----|
| 18 | 2  | 6  | 10 | 14 |
| 9  | 13 | 17 | 1  | 5  |
| 0  | 4  | 8  | 12 | 16 |

Discovery subframe #4

| 15 | 19 | 3  | 7  | 11 |
|----|----|----|----|----|
| 10 | 14 | 18 | 2  | 6  |
| 5  | 9  | 13 | 17 | 1  |
| 0  | 4  | 8  | 12 | 16 |

# FIG. 17

1700

| | |
|---|---|
| 1710 | |

1730 — RF module

display
1740 — module

user
1750 — interface
모듈

processor

memory

1720

**EP 2 871 888 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011130630 A1
- WO 2009009364 A1